# EUROPÄISCHE PATENTSCHRIFT

(11) **EP 1 487 890 B1**
(45) Veröffentlichungstag und Bekanntmachung des Hinweises auf die Patenterteilung: **17.10.2007**
(21) Anmeldenummer: 03712075.5
(22) Anmeldetag: 21.03.2003
(51) Int. Cl.: C08F 290/06, C08F 226/04

(54) **WASSERLÖSLICHE VERZWEIGTE BLOCKCOPOLYMERE**
WATER SOLUBLE BRANCHED BLOCK COPOLYMERS
COPOLYMERES SEQUENCES RAMIFIES HYDROSOLUBLES

(30) Priorität: 28.03.2002 DE 10214087
(43) Veröffentlichungstag der Anmeldung: 22.12.2004
(73) Patentinhaber: Fraunhofer-Gesellschaft zur Förderung der angewandten Forschung e.V., 80686 München (DE)
(72) Erfinder: JAEGER, Werner, 14532 Kleinmachnow (DE); HAHN, Mathias, 14557 Wilhelmshorst (DE); LIESKE, Antje, 14480 Postsdam (DE); KORTH, Heike, 06749 Friedersdorf (DE); STAECK, Rainer, 06792 Sandersdorf (DE); SCORDIALO, Angelo, 64390 Erzhausen (DE)
(86) Internationale Anmeldenummer: PCT/EP2003/002991
(87) Internationale Veröffentlichungsnummer: WO 2003/082938

(56) Entgegenhaltungen:
- US-A- 5 152 903
- US-A- 5 879 564
- US-A- 5 882 525
- US-A- 6 130 303
- US-B1- 6 323 306

## Beschreibung

Die Erfindung betrifft wasserlösliche verzweigte Blockcopolymere aus quaternären Ammoniumverbindungen und Polyalkylenglykolen, wobei die quaternäre Ammoniumgruppen enthaltenden Molekülbausteine Rückgratketten bilden, die durch Polyalkylenglykolblöcke weitmaschig verknüpft sind.

Wasserlösliche kationische Polymere und Copolymere sind von großer praktischer Bedeutung. Sie werden verwendet als Koaqulations- und Flockungsmittel in vielen technischen Prozessen, in denen suspendierte Feststoffe aus wässrigen Systemen abgetrennt werden müssen. Typische Beispiele sind der Prozeß der Papierherstellung, die Abtrennung von Störstoffen in geschlossenen Wasserkreisläufen sowie die Verfahren zur Abwasserbehandlung und Schlammentwässerung bei der Reinigung kommunaler und industrieller Abwässer.

Die Effektivität eines wasserlöslichen kationischen Polymers als Koaqulations- und Flockungsmittel hängt im wesentlichen von folgenden Parametern ab:

Der Art des gewählten Monomers, dem Molekulargewicht des Polymers und der Architektur der Polymerkette.

Auf Grund ihrer hydrolytischen und sonstigen chemischen Stabilität haben Diallylammoniumverbindungen als Monomere weite Verbreitung gefunden. Insbesondere das Poly-diallyldimethylammoniumchlorid (Poly-DADMAC) zeichnet sich durch eine hervorragende Langzeitstabilität aus. Die radikalische Polymerisation des monomeren DADMAC führt zu linearen Polymerstrukturen (US 3 288 770 und DD 127 729).

Die Wirksamkeit bei der Anwendung als Koagulations- und Flockungsmittel hängt vom Molekulargewicht der Polymeren ab. Es wurde deshalb vielfach eine Erhöhung des Molekulargewichts angestrebt. Die US 4 713 431 beschreibt dazu ein Polymerisationsverfahren für DADMAC in inverser Emulsion anstelle der Polymerisation in wässriger Lösung. Eine Molekulargewichtserhöhung kann auch durch radikalische Copolymerisation von DADMAC mit polyfunktionalen, quervernetzenden Comonomeren in wässriger Lösung erreicht werden, wobei verzweigte und/oder vernetzte Strukturen gebildet werden. Als kettenverlängernde Comonomere werden Bisallylester von Dicarbonsäuren (DD 127 729, DD 128 189, D 128 247, DE 27 38 758) sowie Tri- und Tetraallylammoniumverbindungen (FR 1494 438, US 3 544 318, WO 99/13155 und WO 99/19262) vorgeschlagen. Die Copolymerisation des DADMAC in inverser Emulsion mit Triallylammoniumsalzen, Tetraallylammoniumsalzen oder Methylenbisacrylamid wird in US 3 968 037 beschrieben. Die kleinen Mengen an Verzweigungsmitteln werden in der Regel zu Beginn der Polymerisation zugegeben.

Es ist wohl bekannt, dass schon bei Konzentration des polyfunktionalen Comonomeren von mehr als 0,1 % das resultierende Polymer teilweise oder vollständig quervernetzt ist. Das führt zur Ausbildung von Gelanteilen bis zur vollständigen Unlöslichkeit des Polymers in dem Lösungsmittel (Vollmert, Grundriss der Makrornolekularen Chemie, Springer-Verlag, Berlin 1962, S. 196).

Ein verbessertes Verfahren liegt vor, wenn das polyfunktionale Comonomer während der Polymerisation schrittweise oder kontinuierlich zudosiert wird (EP 0 264 710). Das Comonomere kann nunmehr in größerem Maße eingebaut werden und es ergeben sich Polymere mit höherem Molekulargewicht. Allerdings ist ein ziemlich kompliziertes Zugabeprogramm erforderlich und das Risiko der Gelbildung kann nur verringert, aber nicht ausgeschlossen werden. Weiterhin ist nicht zu vermeiden, dass neben hochverzweigten Polymerketten mit hohem Molekulargewicht auch Makromoleküle mit geringem Polymerisationsgrad erzeugt werden. Dieser Anteil mit niedrigerem Molekulargewicht ist auf Grund seiner geringen Effizienz in der Applikation von Nachteil. Die mit polyfunktionalen, quervernetzenden Comonomeren hergestellten wasserlöslichen kationischen Polymere haben zwar im Vergleich zu Polymeren, die ohne diese Comonomere hergestellt wurden, ein höheres Molekulargewicht. Ihre Anwendungseigenschaften sind jedoch noch nicht optimal, denn sie weisen ein sehr engmaschiges Netzwerk mit schlechtem Lösungszustand aus. Das wird ersichtlich anhand der Messwerte der Lösungsviskosimetrie in wässrigen Salzlösungen. Diese ergeben niedrige intrinsische Viskositäten und hohe Hugginskonstanten.

Verzweigte wasserlösliche kationische Polymere können auch durch Pfropfcopolymerisation hergestellt werden.

So wird auf ein Präpolymer aus DADMAC und Dihydroxyalkylderivaten der Acrylsäure durch Initiierung mit Cer-4-salzen die radikalische Pfropfung von DADMAC-Acrylamid-Mischungen vorgenommen (G.B. Butler, J, Macromol. Sci, A 26 (1989) S. 681). Dabei sind allerdings hohe Konzentrationen des Präpolymers erforderlich, um Polymerausbeuten von etwa 80% zu erhalten, was technisch unbefriedigend ist. Ein weiteres Verfahren beschreibt die Copolymerisation von Acrylamid mit Makromonomeren kationischer Verbindungen zur Herstellung verzweigter kationischer Polymere (US 5 211 854). Dieses Verfahren ist jedoch ökonomisch ungünstig.

Nach Angaben der DE 195 24 867 können verzweigte Polyammoniumsalze in einem Zweistufenprozess hergestellt werden. Zunächst erfolgt die Synthese eines Präpolymeren, das Amingruppen enthält. Anschließend wird durch Redoxinitiierung an den Amingruppen die Pfropfpolymerisation mit DADMAC als kationischem Monomer gestartet und damit die verzweigte Struktur aufgebaut. Es werden kammartige kationische Copolymere mit Molekulargewichten größer 100 000, vorzugsweise größer 250 000 g/mol gebildet. Die intrinsischen Viskositäten liegen zwischen 0,68 und 1,37 dl/g. Typische Werte der Hugginskonstanten von Produkten, die gemäß DE 195 24 867 hergestellt wurden, liegen jedoch mit Werten größer 0,6 deutlich oberhalb der für einen guten Lösungszustand kennzeichnenden Werte von 0,3 bis 0,5.

Ausgehend hiervon war es Aufgabe der vorliegenden Erfindung, die genannten Nachteile des Standes der Technik zu beseitigen und wasserlösliche kationische Blockcopolymere mit verzweigter Struktur mit hoher Molmasse und gutem Lösungszustand bereitzustellen.

Diese Aufgabe wird durch die Blockcopolymere mit den Merkmalen des Anspruchs 1 sowie das Verfahren zu deren Herstellung mit den Merkmalen des Anspruchs 9 gelöst. Die weiteren abhängigen Ansprüche zeigen vorteilhafte Weiterbildungen auf. In den Ansprüchen 17 und 18 wird die Verwendung der erfindungsgemäßen Blockcopolymere beschrieben.

Erfindungsgemäß werden wasserlösliche verzweigte Blockcopolymere aus quaternären Ammoniumeinheiten der allgemeinen Formel I 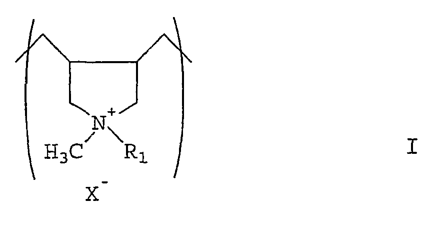 mit
- R₁ =: H, Alkyl(C₁-C₈),
- X⁻ =: passendes Gegenion,
wobei die Rückgratketten untereinander verknüpft sind, indem einzelne Einheiten der allgemeinen Formel I durch Polyalkylenglykolblöcke aus Einheiten der allgemeinen Formel II 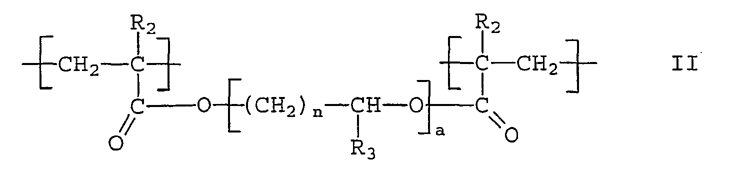 mit
- R₂ =: H, Methyl,
- R₃ =: H, Methyl, Ethyl,
- X⁻ =: passendes Gegenion,
- n =: 1 bis 3 und
- a =: 6 bis 100
ersetzt sind. Der Massenanteil der Einheiten der allgemeinen Formel II liegt dabei zwischen 0,01 und 20 Gew.-%, bezogen auf das gesamte Blockcopolymer, und der Massenanteil der Einheiten der allgemeinen Formel I zwischen 80 und 99,9 Gew.-%.

Die Polyalkylenblöcke stellen dabei Verbindungsstege zwischen den polymeren Rückgratketten, die aus den quaternären Diallylammoniumeinheiten bestehen, dar. Über die Acrylsäureester- oder Methacrylsäureesterendfunktionalisierten Gruppen der Polyalkylenglykole werden diese nun vereinzelt in die Rückgratketten eingebaut. Durch die Länge der Polyalkylenglykolblöcke, die über Parameter a festgelegt wird, und die niedrige Dosierung der Polyalkylenglykole bei der Herstellung kann ein sehr weitmaschiges und große Abstände zwischen den Verbindungsstegen aufweisendes Netzwerk aufgebaut werden.

Die weitmaschig verzweigten Poiyammoniumsalze weisen im Gegensatz zu den bisher bekannten hochkationischen Polymeren in einer Reihe von Applikationsfeldern bessere Eigenschaften auf, insbesondere bei der Schlammentwässerung industrieller und kommunaler Schlämme werden bei verminderter Einsatzmenge in der Regel verbesserte , zumindest aber vergleichbare Trenneffekte erzielt. Im Kaolinsedimentationstest sind im Vergleich zu handelsüblichen Produkten in den Parametern Absetzgeschwindigkeit und Resttrübe deutlich verbesserte Werte erreicht worden. Ähnlich gute Resultate wurden auch im CST-Test an kommunalen Faulschlämmen erzielt. Hier liegen die CST-Werte insbesondere bei sehr geringer Dosierung um ein Vielfaches besser als kommerzielle Vergleichsprodukte. Bemerkenswerte Ergebnisse sind auch mit industriellen Schlämmen erzielt worden (Papierabwasserschlamm), wo insbesondere hervorragende Werte für Flockenbildung und Entwässerungseigenschaften hervorzuheben sind.

Die neuen Polymeren haben gezielt einstellbare Molekulargewichte und intrinsische Viskositäten. Die Molekulargewichte liegen bevorzugt oberhalb 250 000 g/mol und besonders bevorzugt oberhalb 1 000 000 g/mol. Die intrinsischen Viskositäten sind zwischen 25 und 600 ml/g einstellbar, bevorzugt liegen sie zwischen 400 und 600 ml/g. Die Hugginskonstanten liegen bevorzugt zwischen 0,3 und 0,5.

Bevorzugt leitet sich die quaternäre Ammoniumeinheit von Diallyldimethylammoniumchlorid (DADMAC) ab.

Die Polyalkylenglykolblöcke leiten sich vorzugsweise aus Verbindungen der Gruppe der Bis-Acrylsäureester oder Bis-Methacrylsäureester der Polyethylenglykole, Polypropylenglykole, Polybutylenglykole und/oder Polytetrahydrofurane ab.

Als passendes Gegenion X⁻ liegt vorzugsweise Chlorid oder Methosulfat vor.

Erfindungsgemäß wird ebenso ein Verfahren zur Herstellung wasserlöslicher verzweigter Blockcopolymere durch radikalische Polymerisation einer quaternären Diallylammoniumverbindung der allgemeinen Formel III mit 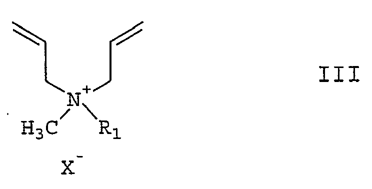
- R₁ =: H, Alkyl(C₁-C₈),
- X⁻ =: passendes Gegenion,
und eines Bis-Acrylsäureester oder Bis-Methacrylsäureester eines Polyalkylenglykols der allgemeinen Formel IV 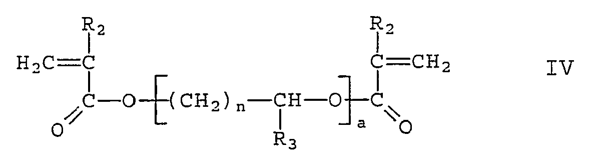 mit
- R₂ =: H, Methyl,
- R₃ =: H, Methyl, Ethyl,
- X⁻ =: passendes Gegenion,
- n =: unabhängig voneinander 1 bis 3,
- a =: 6 bis 100
bereitgestellt. Hierbei beträgt der Massenanteil der Verbindung der allgemeinen Formel IV zwischen 0,01 und 20 Gew.-%, bezogen auf die beiden Ausgangsverbindungen.

Die Polymerisation kann mit beliebigen wasserlöslichen Initiatoren, wie Azoverbindungen oder Redoxsystemen aus Persulfat und Aminen gestartet werden.

Die Polymerisation kann in wässriger Lösung oder bevorzugt in inverser Emulsion erfolgen. Die Zugabe des Bis-Acrylsäureester oder Bis-Methacrylsäureesters des Polyalkylenglykols erfolgt im Umsatzbereich 0 bis 80 % auf einmal, portionsweise oder kontinuierlich.

Verwendung finden die Blockcopolymere als Koaqulations- und Flockungsmittel in vielen technischen Prozessen, in denen suspendierte Feststoffe aus wässrigen Systemen abgetrennt werden müssen. Typische Beispiele sind der Prozeß der Papierherstellung, die Abtrennung von Störstoffen in geschlossenen Wasserkreisläufen sowie die Verfahren zur Abwasserbehandlung und Schlammentwässerung bei der Reinigung kommunaler und industrieller Abwässer.

Anhand der nachfolgenden Beispiele, die sich auf die Polymerisation von DADMAC als typischem kationischen Monomer beziehen, soll der erfindungsgemäße Gegenstand näher erläutert werden. Sie sind jedoch nicht als Einschränkung für den ausschließlichen Gebrauch dieses Monomers für die vorliegende Erfindung zu betrachten.

### Beispiel 1

In einem temperierbaren 11 Glasreaktor, der mit einem Ankerrührer und Gaseinleitung ausgerüstet ist, wird die Ölphase bestehend aus einer Mischung von 240 g Isopar M (Exxon), 8 g Span 80 (ICI), 8 g Hypermer 1599 D (ICI), 8 g Tween 85 (ICI) und 8 g NXC 3 (Condea) vorgelegt und die separat präparierte wäßrige Phase innerhalb 10 min unter Rühren mit 200 min⁻¹ zudosiert. Die Zusammensetzung der wässrigen Phase, die mit HCl auf pH 4 eingestellt wird, ist durch die folgenden Bestandteile gegeben:
- 502 g DADMAC (62%)
- 1,2 g Polyethylenglykoldimethacrylat (Molekulargewicht ca. 875 g/mol)
- 65 g 1 %-ige EDTA-Lösung

Die entstehende Emulsion wird auf 45°C temperiert und 30 min mit Stickstoff durchspült. Danach wird eine Lösung von 1,6 g V-65 (2,2'-Azobis-(2,4-dimethylvaleronitril), gelöst in 10 ml Toluen innerhalb 2h der Emulsion zudosiert. Nach weiteren 2h Reaktionszeit wird die Temperatur auf 65°C angehoben und weitere 300 mg V-65, gelöst in 5 ml Toluen, zugegeben. Es wird noch 3h bei dieser Temperatur gehalten. Die gravimetrische Umsatzbestimmung durch Ausfällen in Aceton und Umfällung, unter Verwendung von Methanol als Lösemittel, ergab einen Umsatz von 96%. Die Stoffeigenschaften wurden durch Bestimmung der Grenzviskositätszahl über eine Auswertung nach Huggins in 1 N NaCl-Lösung charakterisiert. Für das Produkt wurde [η] zu 221 cm³/g ermittelt, die entsprechende Hugginskonstante lag bei 0,37.

### Beispiel 2

### Vergleichsbeispiel ohne Vernetzer

Der Polymerisationsversuch nach Beispiel 1 wird wiederholt, jeedoch ohne Vernetzerkomponente, dagegen werden der wässrigen Phase zusätzlich 16 g 50%-iges Acrylamid zugesetzt. Der Versuch ergab einen Polymerisationsumsatz von 97%. Für das isolierte Produkt wurde eine Grenzviskositätszahl von 135 cm³/g ermittelt, der Wert für k_{H} lag bei 0,39.

### Beispiele 3 und 4

Es wird eine Ölphase aus 240 g Isopar M (Exxon), 6 g Span 80 (ICI), 8 g Hypermer 1599 D (ICI), 8 g Tween 85 (ICI) und 10 g NXC 3 (Condea) präpariert und in den Rührreaktor überführt. Die anstelle des Vernetzers auf Polyethylenglykolbasis aus Beispiel 1 in den hier beschriebenen Beispielen 3 und 4 verwendeten hydrophoberen Vernetzer Polypropylenglykolbisacrylat (1,2 g; Molekulargewicht ca. 900 g/mol) für Beispiel 3 und Polytetrahydrofuranbismethacrylat (2,6 g; Molekulargewicht ca. 2000 g/mol) für Beispiel 4 werden in die Ölphase gegeben, wobei gleichzeitig die Temperatur auf 50°C angehoben und die Lösung 30 min mit Stickstoff durchspült wird. Die eingesetzten Mengen an Vernetzer entsprechen jeweils gleichmolaren Verhältnissen (je 0,7 mmol/mol Monomer). Die getrennt hergestellte wässrige Phase bestehend aus 502 g DADMAC (62%-ig) und 65 g 1 %-ige EDTA Lösung (Lösung mit HCl auf pH 4 eingestellt) wird in der Ölphase dispergiert bei einer Rührerdrehzahl von 150 min⁻¹. Zur I-nitiiierung der Polymerisation wird V-60 (AIBN, 2,2'-Azobisisobutyronitril) verwendet. 1,5 g des Initiators, gelöst in 10 ml Toluen, werden innerhalb 2 h dosiert. Anschließend wird 2 h bei dieser Temperaturgehalten, bevor auf 60°C aufgeheizt wird. Dann werden 0,7 g AIBN in 10 ml Toluen auf einmal zugegeben und weitere 2h bei dieser Temperatur gehalten. Die für die jeweiligen Beispiele erzielten Umsatzwerte lagen bei 95,5% für Beispiel 3 und 96% für Beispiel 4. Die Grenzviskositätszahlen lagen für das Produkt aus Beispiel 3 bei 254 cm³/g (k_{H} ~ 0,42) und bei 185 cm³/g (k_{H} = 0,38) für das Produkt aus Beispiel 4.

### Beispiel 5

Die Ansatzbedingungen und die Reaktionsführung entsprechen dem Beispiel 1. Jedoch wird EDTA als 5%-lge Lösung eingesetzt und die dreifache Vernetzermenge verwendet. Der Vernetzer wird gelöst in 30 ml Wasser und kontinuierlich innerhalb von 5,5 h dem Reaktionsgemisch zudosiert. Die Umsatzprobe ergab einen Endumsatz von 98%. Es wurde eine Grenzviskositätszahl von 585 cm³/g ermittelt, wobei eine Hugginskonstante von 0,44 resultierte.

### Beispiele 6 und 7

Als Vergleichsbeispiel wird die Wirkung eines polymeren und eines strukturähnlichen niedermolekularen Vernetzers auf die Polymereigenschaften beschrieben. Es wird wiederum nach dem prinzipiellen Verfahren nach Beispiel 1 gearbeitet, wobei im Beispiel 6 Polyethylenglykoldiacrylat (1,0 g ;Molekulargewicht ca. 700 g/mol) und im Beispiel 7 Ethylenglykoldiacrylat (250 mg) verwendet werden. Der Reaktionsumsatz betrug am Ende in beiden Beispielen gleichermaßen 97%, die Grenzviskositätszahl in 1 N NaCl-Lösung wurde für das Produkt aus Beispiel 6 zu 280cm³/g ermittelt, wobei k_{H} = 0,39 resultierte. Für das Produkt aus Beispiel 7 wurde dagegen eine Grenzviskositätszahl von 185 cm³/g und eine Hugginskonstante von 0,94 gemessen.

### Beispiele 8 bis 14

### Anwendungstest Kaolinsedimentation (KSD)

Es wurden Proben der Beispiele 1, 5 und 6 vergleichend zu den Proben aus Beispiel 2 (ohne Vernetzer) und 7 (niedermolekularer Vernetzer, sowie hochmolekularen verzweigtkettigen Mustern nach Beispiel 2 der WO 99/13155 (Polymer 16) und Beispiel 1 der DE 195 24 867 hinsichtlich der KSD-Aktivität untersucht. Dazu wurden die hochmolekularen Vergleichsmuster entsprechend den in den jeweiligen Patentschriften offenbarten Rezepturen hergestellt und alle Proben nach Phaseninvertierung als 1 %-ige Lösungen präpariert. Jeweils 5ppm der Polyelektrolytlösungen wurden zu frisch zubereiteten 2%-igen Kaolinsuspensionen unter Rühren zugesetzt. Nach weiteren 5-minütigen Rühren wurde der Rührer abgestellt, das Einsetzen und der Verlauf der Sedimentation, sowie die Resttrübe mittels Durchlichtmessung bestimmt. Die ermittelten Werte enthält Tabelle 1.

**Tabelle 1**

| Bsp. | Probe | Einsetzen der Sedimentation [s] | Sedimentationsgeschwindigkeit [cm/s] | Resttrübe [%] |
|---|---|---|---|---|
| 8 | Produkt aus Bsp. 1 | 18 | 0,24 | 8,1 |
| 9 | Produkt aus Bsp. 5 | 14 | 0,19 | 7,5 |
| 10 | Produkt aus Bsp. 6 | 21 | 0,24 | 10,0 |
| 11 | Produkt aus Bsp. 2 | 37 | 0,34 | 27 |
| 12 | Produkt aus Bsp. 7 | 28 | 0,28 | 23,2 |
| 13 | DE 195 24 867 (Bsp. 1) | 26,5 | 0,29 | 20,7 |
| 14 | WO 99/13155 (Polymer 16) | 24 | 0,27 | 22 |

Die Messungen weisen die Probe nach Beispiel 5 als effektivtstes Muster aus. Der unmittelbare Vergleich der Produkte, die einerseits mit einem polymeren Vernetzer (Beispiel 10 - Produkt aus Beispiel 6) und anderseits mit einem strukturverwandten niedermolekularen Vernetzer (Beispiel 12 - Produkt aus Beispiel 7) zeigt in diesem Anwendungstest eindeutig die Überlegenheit der durch die Verwendung polymerer Vernetzer weitmaschig verzweigten Polymere.

### Beispiele 15 bis 21

Die gleichen Proben, die für den KSD-Tests angewendet wurden, wurden auf ihre Wirksamkeit bei der Schlammentwässerung untersucht. Hierzu erfolgten CST-Messungen. Dazu wurden jeweils 250 ml Faulschlamm unter 800 Umdrehungen geschert. Die Polyelektrolyte wurden wiederum nach Phaseninvertierung als 1 %-ige Lösungen präpariert. 15, 30 und 60 s nach der Zugabe von Polymer (als Beispiel ist hier die übliche Zugabe von 200 ppm gewählt worden) zum gescherten Faulschlamm wurden die CST-Werte bestimmt. Die ermittelten Meßergebnisse enthält Tabelle 2.

**Tabelle 2**

| Bsp. | Probe | CST-Wert nach | | |
|---|---|---|---|---|
| | | 15 s | 30 s | 60 s |
| 15 | Produkt aus Bsp. 1 | 10 | 12 | 13 |
| 16 | Produkt aus Bsp. 5 | 9 | 10 | 10 |
| 17 | Produkt aus Bsp. 6 | 11 | 13 | 14 |
| 18 | Produkt aus Bsp. 2 | 32 | 35 | 44 |
| 19 | Produkt aus Bsp. 7 | 19 | 21 | 29 |
| 20 | WO 99/13155 (Polymer 16) | 14 | 17 | 19 |
| 21 | DE 195 24 867 (Bsp. 1) | 11 | 14 | 15 |

Auch bei diesem Test erweist sich das Produkt aus obigem Beispiel 5 als das effektivste.

## Patentansprüche

1. Wasserlösliche verzweigte Blockcopolymere aus polymeren Rückgratketten aus quaternären Ammoniumeinheiten der allgemeinen Formel I 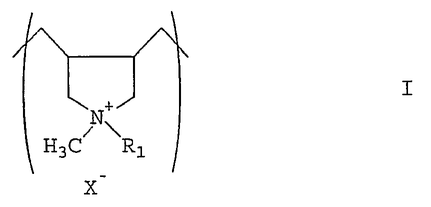 mit
R₁ = H, Alkyl(C₁-C₈),
X⁻ = passendes Gegenion,
wobei die Rückgratketten untereinander verknüpft sind, indem einzelne Einheiten der allgemeinen Formel I durch Polyalkylenglykolblöcke aus Einheiten der allgemeinen Formel II mit 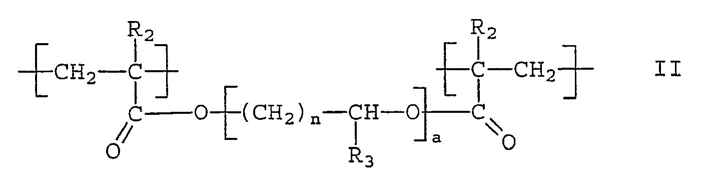
R₂ = H, Methyl,
R₃ = H, Methyl, Ethyl,
X⁻ = passendes Gegenion,
n = 1 bis 3 und
a = 6 bis 100
ersetzt sind und der Massenanteil der Einheiten der allgemeinen Formel II zwischen 0,01 und 20 Gew.-%, bezogen auf das gesamte Blockcopolymer, liegt.

2. Blockcopolymer nach Anspruch 1,
**dadurch gekennzeichnet, dass** die Molmasse des Blockcopolymers größer oder gleich 250.000, besonders bevorzugt größer oder gleich 1.000.000 g/mol ist.

3. Blockcopolymer nach mindestens einem der Ansprüche 1 oder 2,
**dadurch gekennzeichnet, dass** die intrinsische Viskosität des Blockcopolymers, gemessen bei 30°C in 1N Natriumchlorid-Lösung, zwischen 25 und 600 ml/g liegt.

4. Blockcopolymer nach Anspruch 3,
**dadurch gekennzeichnet, dass** die intrinsische Viskosität des Blockcopolymers zwischen 400 und 600 ml/g liegt.

5. Blockcopolymer nach mindestens einem der Ansprüche 1 bis 4,
**dadurch gekennzeichnet, dass** die Hugginskonstante im Bereich zwischen 0,3 und 0,5 liegt.

6. Blockcopolymer nach mindestens einem der Ansprüche 1 bis 5,
**dadurch gekennzeichnet, dass** die polymere Rückgratkette aus cyclischen quaternären Ammoniumchloriden als Einheit der allgemeinen Formel I hergeleitet ist.

7. Blockcopolymer nach mindestens einem der Ansprüche 1 bis 6,
**dadurch gekennzeichnet, dass** sich die Polyalkylenglykolblöcke aus Verbindungen der Gruppe der Bis-Acrylsäureester oder Bis-Methacrylsäureester der Polyethylen-, Polypropylen-, Polybutylenglykole und/oder Polytetrahydrofurane ableiten.

8. Blockcopolymer nach mindestens einem der Ansprüche 1 bis 7,
**dadurch gekennzeichnet, dass** die Gegenionen X⁻ unabhängig voneinander ausgewählt sind aus der Gruppe Chlorid und Methosulfat.

9. Verfahren zur Herstellung wasserlöslicher verzweigter Blockcopolymere durch radikalische Polymerisation einer quaternären Diallylammoniumverbindung der allgemeinen Formel III 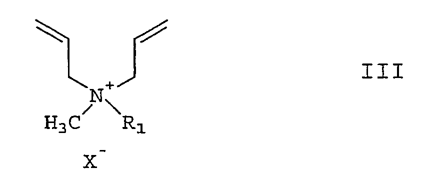 mit
R₁ = H, Alkyl(C₁-C₈),
X⁻ = passendes Gegenion,
und Bis-Acrylsäureestern oder Bis-Methacrylsäureestern der Polyalkylenglykole der allgemeinen Formel IV 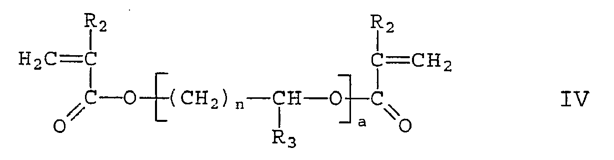 mit
R₂ = H, Methyl,
R₃ = H, Methyl, Ethyl,
X⁻ = passendes Gegenion,
n = 1 bis 3 und
a = 6 bis 100,
wobei der Massenanteil der Verbindung der allgemeinen Formel IV zwischen 0,01 und 20 Gew.-%, bezogen auf die beiden Ausgangsverbindungen, beträgt.

10. Verfahren nach Anspruch 9,
**dadurch gekennzeichnet, dass** als Diallylammoniumverbindung Diallyldimethylammoniumchlorid verwendet wird.

11. Verfahren nach mindestens einem der Ansprüche 9 oder 10,
**dadurch gekennzeichnet, dass** als Polyalkylenglykol Verbindungen der Gruppe Bis-Acrylsäureester oder Bis-Methacrylsäureester von Polyethylen-, Polypropylen-, Polybutylenglykolen und/oder Polytetrahydrofuranen eingesetzt werden.

12. Verfahren nach mindestens einem der Ansprüche 9 bis 11,
**dadurch gekennzeichnet, dass** als Initiator eine wasserlösliche Azoverbindung oder ein Redoxsystem bestehend aus Peroxodisulfaten und einem Amin verwendet wird.

13. Verfahren nach Anspruch 12,
**dadurch gekennzeichnet, dass** als Initiator ein Redoxsystem aus Peroxodisulfaten und einem alkoxyliertem Amintensid verwendet wird.

14. Verfahren nach mindestens einem der Ansprüche 9 bis 13,
**dadurch gekennzeichnet, dass** das Polyalkylenglykol während der Polymerisation der quaternären Diallylammoniumverbindung innerhalb des Umsatzbereiches von 0 bis 80 % auf einmal, portionsweise oder kontinuierlich zugesetzt wird.

15. Verfahren nach mindestens einem der Ansprüche 9 bis 14,
**dadurch gekennzeichnet, dass** das Verfahren in wässriger Lösung erfolgt.

16. Verfahren nach mindestens einem der Ansprüche 9 bis 15,
**dadurch gekennzeichnet, dass** das Verfahren in inverser Emulsion erfolgt.

17. Verwendung der Blockcopolymere nach mindestens einem der Ansprüche 1 bis 8 als Koagulations- und Flockungsmittel zur Abtrennung suspendierter Feststoffe.

18. Verwendung nach Anspruch 17 bei der Papierherstellung, der Abwasserbehandlung und der Schlammentwässerung.

## Claims

1. Water-soluble branched block copolymers made of polymer backbone chains made of quaternary ammonium units of the general formula I 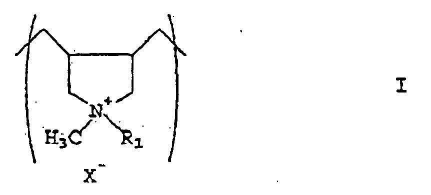 with
R₁ = H, alkyl(C₁ - C₈),
X⁻ = a suitable counterion,
the backbone chains being mutually cross-linked by individual units of the general formula L being replaced by polyalkylene glycol blocks made of units of the general formula II 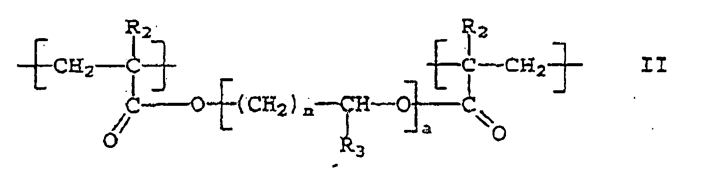 with
R₂ = H, methyl,
R₃ = H, methyl, ethyl
X⁻ = a suitable counterion,
n = 1 to 3 and
a = 6 to 100
and the mass proportion of the units of the general formula II being between 0.01 and 20% by weight, relative to the total block copolymer.

2. Block copolymer according to claim 1,
**characterised in that** the molar mass of the block copolymer is greater than or equal to 250,000, particularly preferred greater than or equal to 1,000,000 g/mol.

3. Block copolymer according to at least one of the claims 1 or 2,
**characterised in that** the intrinsic viscosity of the block copolymer, measured at 30°C in 1N sodium chloride solution, is between 25 and 600 ml/g.

4. Block copolymer according to claim 3,
**characterised in that** the intrinsic viscosity of the block copolymer is between 400 and 600 ml/g.

5. Block copolymer according to at least one of the claims 1 to 4,
**characterised in that** the Huggins constant is in the range between 0.3 and 0.5.

6. Block copolymer according to at least one of the claims 1 to 5,
**characterised in that** the polymer backbone chain is derived from cyclic quaternary ammonium chlorides as unit of the general formula I.

7. Block copolymer according to at least one of the claims 1 to 6,
**characterised in that** the polyalkylene glycol blocks are derived from compounds of the group of bis-acrylic acid esters or bis-methacrylic acid esters of polyethylene-, polypropylene-, polybutylene glycols and/or polytetrahydrofurans.

8. Block copolymer according to at least one of the claims 1 to 7,
**characterised in that** the counterions X- are selected independently of each other from the group chloride and methosulphate.

9. Method for producing water-soluble branched block copolymers by radical polymerisation of a quaternary diallylammonium compound of the general formula III 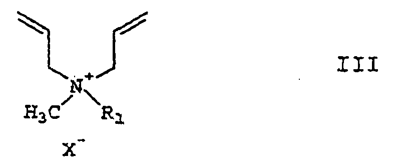 with
R₁ = H, alkyl(C₁ - C₈),
X⁻ = a suitable counterion,
and bis-acrylic acid esters or bis-methacrylic acid esters of the polyalkylene glycols of the general formula IV 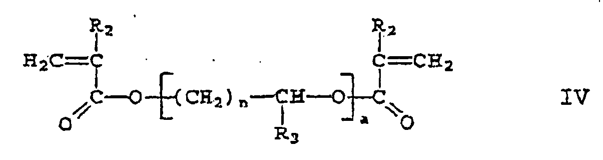 with
R₂ = H, methyl,
R₃ = H, methyl, ethyl,
X⁻ = a suitable counterion,
n = 1 to 3 and
a = 6 to 100,
the mass proportion of the compound of the general formula IV being between 0.01 and 20% by weight, relative to the two initial compounds.

10. Method according to claim 9,
**characterised in that** diallyldimethylammonium chloride is used as diallylammonium compound.

11. Method according to at least one of the claims 9 or 10,
**characterised in that** compounds of the group of bis-acrylic acid esters or bis-methacrylic acid esters of polyethylene-, polypropylene-, polybutylene glycols and/or polytetrahydrofurans are used as polyalkylene glycol.

12. Method according to at least one of the claims 9 to 11,
**characterised in that** a water-soluble azo compound or a redox system comprising peroxodisulphates and an amine is used as initiator.

13. Method according to claim 12,
**characterised in that** a redox system comprising peroxodisulphates and an alkoxylated amine surfactant is used as initiator.

14. Method according to at least one of the claims 9 to 13,
**characterised in that** the polyalkylene glycol is added all at once, in portions or continuously during polymerisation of the quaternary diallylammonium compound within the conversion range of 0 to 80%.

15. Method according to at least one of the claims 9 to 14,
**characterised in that** the method is effected in aqueous solution.

16. Method according to at least one of the claims 9 to 15,
**characterised in that** the method is effected in inverse emulsion.

17. Use of the block copolymers according to at least one of the claims 1 to 8, as coagulation and flocculation agents for separation of suspended solid materials.

18. Use according to claim 17 in paper production, waste water treatment and sludge dewatering.

## Revendications

1. Copolymères séquencés ramifiés hydrosolubles constitués de squelettes polymères d'unités d'ammonium quaternaires de formule générale I 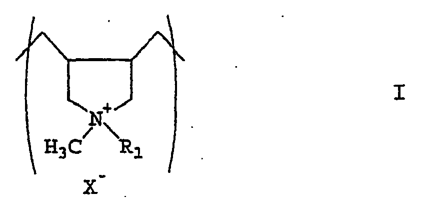 avec
R₁ = H, groupe alkyle (C₁ à C₈),
X⁻ = contre-ion adapté,
dans lesquels les squelettes sont liés les uns aux autres grâce au remplacement de certaines unités de formule générale I par des blocs de polyalkylène-glycol constitués d'unités de formule générale II avec 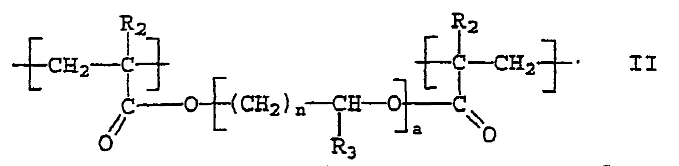 avec
R₂ = H, groupe méthyle,
R₃ = H, groupe méthyle, éthyle,
X⁻ = contre-ion adapté
n = 1 à 3 et
a = 6 à 100
et la fraction massique d'unités de formule générale II est comprise entre 0,01 et 20 % en poids par rapport au copolymère séquencé entier.

2. Copolymère séquencé selon la revendication 1,
**caractérisé en ce que**
la masse molaire du copolymère séquencé est supérieure ou égale à 250.000, de manière particulièrement préférée supérieure ou égale à 1.000.000 g/mole.

3. Copolymère séquencé selon au moins l'une quelconque des revendications 1 ou 2,
**caractérisé en ce que**
la viscosité intrinsèque du copolymère séquencé, mesurée à 30°C dans une solution de 1N de chlorure de sodium, est comprise entre 25 et 600 ml/g.

4. Copolymère séquencé selon la revendication 3,
**caractérisé en ce que**
la viscosité intrinsèque du copolymère séquencé est comprise entre 400 et 600 ml/g.

5. Copolymère séquencé selon au moins l'une des revendications 1 à 4,
**caractérisé en ce que**
la constante de Huggins est comprise entre 0,3 et 0,5.

6. Copolymère séquencé selon au moins l'une des revendications 1 à 5,
**caractérisé en ce que**
le squelette polymère constitué de chlorures d'ammonium quaternaires cycliques est dérivé, sous forme d'unité, de la formule générale I.

7. Copolymère séquencé selon au moins l'une des revendications 1 à 6,
**caractérisé en ce que**
les blocs de polyalkylène-glycol sont dérivés de composés du groupe des esters d'acides diacryliques ou des esters d'acides diméthacryliques de polyéthylène-glycols, de polypropylène-glycols, de polybutylène-glycols et/ou de polytétrahydrofuranes.

8. Copolymère séquencé selon au moins l'une des revendications 1 à 7,
**caractérisé en ce que**
les contre-ions X- sont choisis, indépendamment l'un de l'autre, dans le groupe chlorure et méthosulfate.

9. Procédé de fabrication de copolymères séquencés ramifiés hydrosolubles par polymérisation radicalaire d'un composé de diallylammonium quaternaire de formule générale III 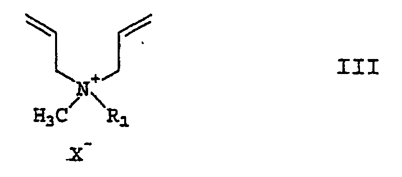 avec
R₁ = H, groupe alkyle (C₁ à C₈),
X⁻ = contre-ion adapté,
et d'esters d'acide diacrylique ou d'esters d'acide diméthacrylique des polyalkylène-glycols de formule générale IV 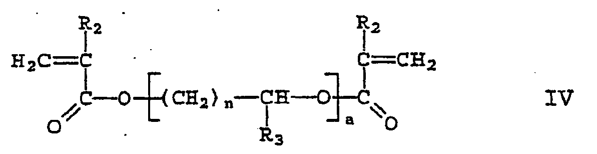 avec
R₂ = H, groupe méthyle,
R₃ = H, groupe méthyle, éthyle,
X⁻ = contre-ion adapté
n = 1 à 3 et
a = 6 à 100
et la fraction massique du composé de formule générale IV est comprise entre 0,01 et 20 % en poids par rapport aux deux composés de départ.

10. Procédé selon la revendication 9,
**caractérisé en ce qu'**
on utilise, comme composé de diallylammonium, du chlorure de diallyldiméthylammonium.

11. Procédé selon au moins l'une des revendications 9 ou 10,
**caractérisé en ce qu'**
on utilise, comme polyalkylène-glycol, des composés du groupe ester d'acide diacrylique ou ester d'acide diméthacrylique de polyéthylène-glycols, de polypropylène-glycols, de polybutylène-glycols et/ou de polytétrahydrofuranes.

12. Procédé selon au moins l'une des revendications 9 à 11,
**caractérisé en ce qu'**
on utilise, comme initiateur, un composé azo hydrosoluble ou un système redox constitué de bisulfates peroxo et d'une amine.

13. Procédé selon la revendication 12,
**caractérisé en ce qu'**
on utilise, comme initiateur, un système redox constitué de bisulfates peroxo et d'un tensioactif aminé alcoxylé.

14. Procédé selon au moins l'une des revendications 9 à 13,
**caractérisé en ce qu'**
on ajoute le polyalkylène-glycol pendant la polymérisation du composé de diallylammonium quaternaire dans les limites du domaine de conversion de 0 à 80 %, en une seule fois, par portions ou en continu.

15. Procédé selon au moins l'une des revendications 9 à 14,
**caractérisé en ce qu'**
on réalise le procédé en solution aqueuse.

16. Procédé selon au moins l'une des revendications 9 à 15,
**caractérisé en ce qu'**
on réalise le procédé en émulsion inverse.

17. Utilisation des copolymères séquencés selon au moins l'une quelconque des revendications 1 à 8, en tant qu'agent de coagulation et de floculation pour séparer les substances solides en suspension.

18. Utilisation selon la revendication 17, pour fabriquer du papier, traiter les eaux usées et déshydrater les boues.
